# FASCICULE DE BREVET EUROPEEN

(11) **EP 1 460 504 B1**
(45) Date de publication et mention de la délivrance du brevet: **23.07.2008**
(21) Numéro de dépôt: 04290529.9
(22) Date de dépôt: 26.02.2004
(51) Int. Cl.: G05D 1/06

(54) **Système de pilotage d'un aéronef, au moins pour piloter l'aéronef lors d'une approche de non précision en vue d'un atterrissage**
System zur Steuerung eines Flugzeuges, zumindest zur Steuerung des Flugzeuges bei ungenauem Landeanflug und der darauf folgenden Landung
System for piloting an aircraft, at least for piloting the aircraft during a non precision approach to landing

(30) Priorité: 19.03.2003 FR 0303336
(43) Date de publication de la demande: 22.09.2004
(73) Titulaire: AIRBUS France, 31060 Toulouse (FR)
(72) Inventeur: Tatham, Gilles, 31880 La Salvetat Saint Gilles (FR); Peyrucain, Eric, 31180 Saint Genies Bellevue (FR)
(74) Mandataire: Hauer, Bernard

(56) Documents cités:
- EP-A- 1 273 987
- US-A- 5 820 080
- US-B1- 6 178 379

## Description

La présente invention concerne un système de pilotage d'un aéronef, au moins pour piloter l'aéronef lors d'une approche de non précision en vue d'un atterrissage.

Dans le cadre de la présente invention, on entend par "approche de non précision" (en anglais "non precision approach") une approche qui n'est pas une approche de précision aux instruments, telle que par exemple une approche de type ILS ("Instrument Landing System"). On sait que, pour mettre en oeuvre une approche de précision aux instruments, on utilise des stations sol qui sont situées en bordure de piste et au moins un récepteur radio spécialisé monté à bord de l'aéronef, qui fournit un guidage horizontal et vertical avant et pendant l'atterrissage en présentant au pilote la déviation latérale par rapport à un axe d'approche et la déviation verticale par rapport à un plan de descente. Une telle approche de précision aux instruments apporte une assistance importante et efficace à l'atterrissage (par un guidage latéral et un guidage vertical), en particulier par mauvaise visibilité (brouillard, ...) ou en absence de visibilité.

Une approche de non précision, telle que considérée dans la présente invention, existe donc lorsque les informations précédentes ne sont pas disponibles, tout au moins en partie, de sorte qu'une approche de précision usuelle ne peut pas être mise en oeuvre.

Par ailleurs, par le document EP-0 283 353, on connaît un système d'aide à l'atterrissage d'un aéronef, qui utilise des satellites de navigation GPS/NAVSTAR. Ce système connu comporte notamment :
- des sources d'informations qui fournissent, en particulier, la position effective de l'aéronef ;
- une unité de traitement d'informations, qui traite les informations issues desdites sources d'informations et qui comprend une fonction relative à une approche de non précision ;
- un dispositif utilisateur pour une approche de non précision, qui utilise les résultats des traitements mis en oeuvre par l'unité de traitement d'informations, pour permettre le guidage de l'aéronef jusqu'à son atterrissage lors d'une approche de non précision ;
- des moyens, et notamment un récepteur MLS, destinés à mettre en oeuvre une approche de précision ; et
- un dispositif utilisateur destiné à une telle approche de précision.

La présente invention concerne un système de pilotage permettant de mettre en oeuvre une approche de non précision de type précité.

A cet effet, selon l'invention, ledit système de pilotage qui est embarqué sur l'aéronef et qui comporte :
- des sources d'informations qui fournissent au moins une indication de position relative à la position effective de l'aéronef ;
- une unité de traitement d'informations, qui traite des informations issues desdites sources d'informations et comprend une fonction de mode d'approche assisté relative à une approche de non précision ;
- un dispositif utilisateur pour une approche de non précision, qui utilise les résultats de traitements mis en oeuvre par ladite unité de traitement d'informations, pour permettre le guidage de l'aéronef jusqu'à son atterrissage lors d'une approche de non précision ;
- un récepteur multimode d'aide à l'atterrissage destiné à mettre en oeuvre une approche de précision ; et
- un dispositif utilisateur pour une approche de précision, qui comprend des fonctionnalités utilisant des paramètres issus dudit récepteur multimode d'aide à l'atterrissage et qui permet le guidage de l'aéronef jusqu'à son atterrissage lors d'une approche de précision,
est remarquable en ce que :
- ladite fonction de mode d'approche assisté est intégrée dans ledit récepteur multimode d'aide à l'atterrissage ;
- ledit dispositif utilisateur pour une approche de non précision correspond audit dispositif utilisateur pour une approche de précision et il utilise pour l'approche de non précision lesdites fonctionnalités utilisant des paramètres issus dudit récepteur multimode d'aide à l'atterrissage ;
- lesdites sources d'informations comportent une base de données embarquée qui contient des informations permettant de caractériser un axe d'approche virtuel pour une approche de non précision ;
- ladite fonction de mode d'approche assisté détermine des déviations latérale et verticale entre la position effective de l'aéronef et la position qu'il aurait s'il était sur ledit axe d'approche virtuel ; et
- ledit dispositif utilisateur pour une approche de non précision met en oeuvre un guidage de l'aéronef de manière à annuler ces déviations.

Un tel récepteur multimode d'aide à l'atterrissage, de préférence de type MMR ("Multi Mode Receiver"), est destiné de façon usuelle à mettre en oeuvre une approche de précision aux instruments, par exemple de type ILS, en utilisant les signaux transmis par les stations sol précitées.

Grâce à l'intégration conforme à l'invention de ladite fonction de mode d'approche assisté dite FLS (qui permet de mettre en oeuvre une approche de non précision) dans ledit récepteur multimode d'aide à l'atterrissage, on peut utiliser des liaisons entre équipements (calculateurs, capteurs) existant déjà, comme précisé ci-dessous, et la mise en oeuvre de l'invention nécessite uniquement des modifications de type logiciel, ce qui permet bien entendu de réduire le coût et l'encombrement.

De plus, cette solution est très robuste et évolutive, puisque les éventuelles mises à jour peuvent être réalisées (simplement et rapidement) de façon logicielle.

De façon avantageuse, ledit récepteur multimode d'aide à l'atterrissage comprend une fonction de positionnement par satellites, en liaison avec un système de positionnement par satellites.

En outre, dans un mode de réalisation préféré, lesdites sources d'informations comportent un calculateur de gestion de vol, de préférence de type FMS ("Flight Management System"), ainsi qu'une pluralité de capteurs qui sont reliés audit calculateur de gestion de vol.

Par ailleurs, de façon avantageuse, lesdites sources d'informations comportent, de plus, une unité de référence inertielle qui détermine une première indication de position de l'aéronef.

Dans ce cas, dans une première variante, ladite unité de référence inertielle fournit ladite première indication de position au calculateur de gestion de vol, qui transmet ensuite cette première indication de position audit récepteur multimode d'aide à l'atterrissage.

En outre, dans une seconde variante, ladite unité de référence inertielle fournit ladite première indication de position directement audit récepteur multimode d'aide à l'atterrissage, par l'intermédiaire d'une liaison spécifique. Dans ce cas, avantageusement, ledit récepteur multimode d'aide à l'atterrissage comprend une fonction de positionnement par satellites, en liaison avec un système de positionnement par satellites, qui détermine une seconde indication de position, et ledit récepteur multimode d'aide à l'atterrissage détermine, à partir desdites première et deuxième indications de position, une première indication de position affinée, qui est donc particulièrement précise.

Par ailleurs, dans un mode de réalisation particulier, le système de pilotage conforme à l'invention comporte un dispositif de positionnement par satellites qui détermine une troisième indication de position qu'il fournit à ladite unité de référence inertielle, et ladite unité de référence inertielle détermine une seconde indication de position affinée à partir desdites première et troisième indications de position. Ceci permet d'obtenir une indication de position particulièrement fiable et précise.

Dans ce cas, dans une première variante, ladite unité de référence inertielle fournit ladite seconde indication de position affinée au calculateur de gestion de vol, qui transmet ensuite cette seconde indication de position affinée audit récepteur multimode d'aide à l'atterrissage.

Dans une seconde variante, ladite unité de référence inertielle fournit ladite seconde indication de position affinée directement audit récepteur multimode d'aide à l'atterrissage, par l'intermédiaire d'une liaison spécifique. Ceci permet d'améliorer le niveau d'intégrité des indications de position de l'aéronef et, de plus, de réduire leur délai de transmission.

Par ailleurs, dans un autre mode de réalisation particulier, le système de pilotage conforme à l'invention comporte un dispositif de positionnement par satellites qui détermine une quatrième indication de position qu'il fournit à un calculateur de gestion de vol, ladite unité de référence inertielle fournit ladite première indication de position également audit calculateur de gestion de vol, et ledit calculateur de gestion de vol détermine, à partir desdites première et quatrième indications de position, une troisième indication de position affinée, qu'il transmet audit récepteur multimode d'aide à l'atterrissage.

Les figures du dessin annexé feront bien comprendre comment l'invention peut être réalisée. Sur ces figures, des références identiques désignent des éléments semblables.

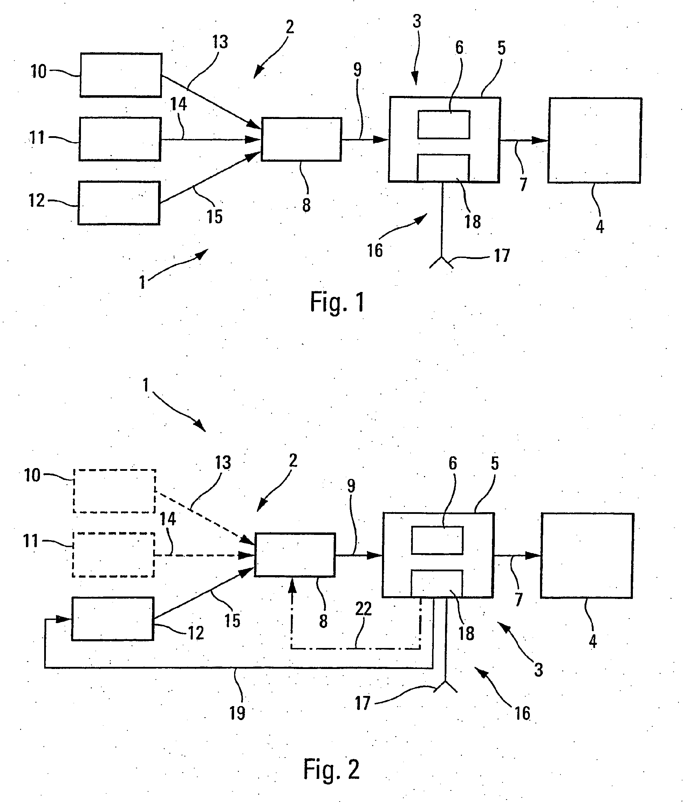

Les figures 1 à 4 sont les schémas synoptiques de différents modes de réalisation du système de pilotage conforme à l'invention.

Le système 1 conforme à l'invention et représenté dans un mode de réalisation de base sur la figure 1, est destiné au pilotage d'un aéronef, en particulier d'un avion de transport civil, au moins pour piloter l'aéronef lors d'une approche de non précision (c'est-à-dire en l'absence d'informations permettant de mettre en oeuvre une approche usuelle de précision aux instruments) en vue d'un atterrissage sur une piste d'atterrissage (non représentée).

Ledit système de pilotage 1 qui est embarqué sur l'aéronef, est du type comportant :
- des sources d'informations 2 ;
- une unité de traitement d'informations 3, qui traite des informations issues desdites sources d'informations 2 ; et
- un dispositif utilisateur 4, qui utilise les résultats des traitements mis en oeuvre par ladite unité de traitement d'informations 3.

Selon l'invention :
- lesdites sources d'informations 2 fournissent à ladite unité de traitement d'informations 3 :
   ■ au moins une indication de position relative à la position effective de l'aéronef, indication de position qui peut être déterminée et transmise de différentes façons dans le cadre de la présente invention, comme précisé ci-dessous ; et
   ■ des informations permettant de caractériser un axe d'approche virtuel, pour l'approche de la piste d'atterrissage. Bien entendu, ces informations, considérées dans l'approche de non précision de la présente invention, ne comprennent pas les données de stations sol de guidage comme dans le cas d'une approche de précision aux instruments ; et
- ladite unité de traitement d'informations 3 comporte un récepteur multimode d'aide à l'atterrissage 5, de préférence de type MMR ("Multi Mode Receiver") qui comprend une fonction 6 de mode d'approche assisté, dite FLS, relative à une approche de non précision et susceptible de déterminer les déviations latérale et verticale entre la position effective de l'aéronef et la position qu'il aurait s'il était sur ledit axe d'approche virtuel, et qui transmet les déviations latérale et verticale ainsi déterminées audit dispositif utilisateur 4, par l'intermédiaire d'une liaison 7.

On sait que lors d'une approche de non précision, on peut mettre en oeuvre l'un d'une pluralité de modes d'approche assistés possibles, le mode d'approche assisté utilisé étant sélectionné par le pilote. Selon ces modes d'approche assistés :
- un axe d'approche virtuel est déterminé, notamment à partir d'informations contenues dans une base de données embarquée à bord de l'aéronef et faisant partie desdites sources d'informations 2 ;
- les déviations latérale et verticale de la position de l'aéronef (dont une indication de position est reçue desdites sources d'informations 2) par rapport à cet axe d'approche virtuel, sont calculées par l'intermédiaire de ladite fonction 6 de mode d'approche assisté FLS, qui est intégrée selon l'invention dans ledit récepteur multimode d'aide à l'atterrissage 5 ; et
- l'aéronef est alors piloté de manière à annuler ces déviations.

Plus précisément, ledit dispositif utilisateur 4 utilise les informations fournies par ledit récepteur multimode d'aide à l'atterrissage 5 pour permettre le guidage de l'aéronef jusqu'à son atterrissage, soit directement (le dispositif utilisateur 4 peut alors comporter un pilote automatique), soit indirectement (le dispositif utilisateur 4 peut alors comporter un écran de visualisation, pour présenter lesdites informations au pilote qui réalise dans ce cas le guidage).

Comme on peut le voir sur les figures 1 à 4, lesdites sources d'informations 2 comportent un calculateur de gestion de vol 8, de préférence de type FMS ("Flight Management System"), qui est relié par une liaison 9 audit récepteur multimode d'aide à l'atterrissage 5, ainsi qu'une pluralité de capteurs 10, 11, 12 qui sont reliés respectivement par des liaisons 13, 14, 15 audit calculateur de gestion de vol 8 et qui comportent notamment :
- un radiophare 10 d'alignement omnidirectionnel VHF, de préférence de type VOR ("VHF Omnidirectional Range"). Un tel radiophare omnidirectionnel à très haute fréquence et courte portée, fournit à bord de l'aéronef l'indication d'un relèvement du radiophare ou les écarts gauche et droit par rapport à la route ;
- un dispositif de mesure de distance 11, de préférence de type DME ("Distance Measuring Equipment"). Un tel dispositif mesure le temps aller-retour de signaux entre l'aéronef et un émetteur/récepteur au sol et en déduit la distance et la vitesse sol ; et
- une unité de référence inertielle 12, de préférence de type IRS ("Inertial Référence System") ou de type ADIRS ("Air Data and Inertial Référence System").

Le calculateur de gestion de vol 8 transmet au récepteur multimode d'aide à l'atterrissage 5 des informations (position du seuil de la piste d'atterrissage, pente ou angle de descente, ...) issues, par exemple, d'une base de données et permettant de caractériser un axe d'approche virtuel qui est représentatif du mode d'approche assisté, sélectionné par le pilote (parmi la pluralité de modes d'approche assistés qui sont possibles pour une approche de non précision).

Par ailleurs, ledit calculateur de gestion de vol 8 transmet également audit récepteur multimode d'aide à l'atterrissage 5, une indication de position de l'aéronef, qui permet de définir l'altitude, la longitude et la latitude de l'aéronef.

Dans le mode de réalisation particulier représenté sur la figure 1 :
- dans une première variante, cette indication de position est calculée par le calculateur 8, à partir d'informations reçues de différents systèmes et capteurs 10, 11, 12 ; et
- dans une seconde variante, cette indication de position est calculée par l'unité de référence inertielle 12, à partir de ses propres capteurs (capteurs de pression pour l'altitude, centrale inertielle).

Le système de pilotage 1 conforme à l'invention comporte, de plus, un dispositif 16 de positionnement par satellites, qui est en liaison avec un système de type GPS ("Global Positioning System") et qui comporte une antenne 17 et une fonction logicielle 18 qui est intégrée dans le récepteur multimode d'aide à l'atterrissage 5.

Grâce à l'intégration conforme à l'invention de la fonction 6 de mode d'approche assisté dite FLS (qui permet de mettre en oeuvre une approche de non précision) dans ledit récepteur multimode d'aide à l'atterrissage 5, on peut utiliser des liaisons entre équipements (calculateurs, capteurs) existant déjà, et la mise en oeuvre de l'invention nécessite uniquement des modifications de type logiciel, ce qui permet bien entendu de réduire le coût et l'encombrement.

De plus, cette solution est très robuste et évolutive, puisqu'elle nécessite en général uniquement des mises à jour logicielles.

En outre, de nombreuses fonctionnalités relatives à l'utilisation des paramètres issus du récepteur multimode d'aide à l'atterrissage 5, qui sont par exemple intégrées dans le dispositif utilisateur 4 et qui sont développées pour des modes d'approche aux instruments (par exemple ILS), sont réutilisables lorsqu'un mode d'approche assisté FLS (pour une approche de non précision) est sélectionné. De façon non limitative, on peut citer les lois de guidage du pilote automatique, ainsi que l'affichage sur un écran de visualisation des déviations entre la position de l'aéronef et l'axe d'approche [dans ce cas toutefois, on utilise de préférence une symbologie d'affichage différente en mode d'approche assisté FLS (pour une approche de non précision) pour attirer l'attention du pilote sur l'activation de ce mode]. Ainsi, l'architecture conforme à l'invention du système de pilotage 1 facilite la réalisation d'une interface homme/machine la plus proche possible de l'interface usuelle correspondant à une approche aux instruments ILS.

Dans un autre mode de réalisation représenté sur la figure 2, dans une première variante, l'unité de référence inertielle 12 est reliée directement par une liaison spécifique 19 à la fonction logicielle 18 du dispositif GPS 16. Elle reçoit de ce dispositif GPS 16 une indication de position GPS.

Dans ce cas, ladite unité de référence inertielle 12 détermine, à partir de sa propre indication de position et de cette indication de position GPS, une indication de position affinée, ce qui permet bien entendu d'augmenter la précision de l'indication de position qui est ensuite transmise au récepteur multimode 5, via le calculateur 8 et les liaisons 15 et 9.

On notera que, dans les modes de réalisation des figures 2 à 4, on a présenté en traits interrompus, les capteurs et les liaisons du système de pilotage 1, qui ne participent pas à la détermination et à la transmission de l'indication de position.

Dans une seconde variante du mode de réalisation de la figure 2, le système de pilotage 1 comporte une liaison 22 (représentée en traits mixtes) au lieu de la liaison 19. Cette liaison 22 relie directement la fonction logicielle 18 du dispositif GPS 16 audit calculateur de gestion de vol 8. Dans cette variante, ledit calculateur 8 reçoit une indication de position (comprenant de préférence l'altitude, la longitude et la latitude de l'aéronef) qui est calculée par l'unité de référence inertielle 12, directement de cette dernière par la liaison 15, et une indication de position GPS, directement de ladite fonction logicielle 18 par la liaison 22. Ledit calculateur 8 calcule, à partir de ces deux indications de position, une indication de position affinée, qu'il transmet au récepteur multimode 5. L'avantage de cette seconde variante par rapport à la première variante de la figure 2, réside dans le fait que cette variante ne nécessite pas de modification du logiciel de l'unité de référence inertielle 12.

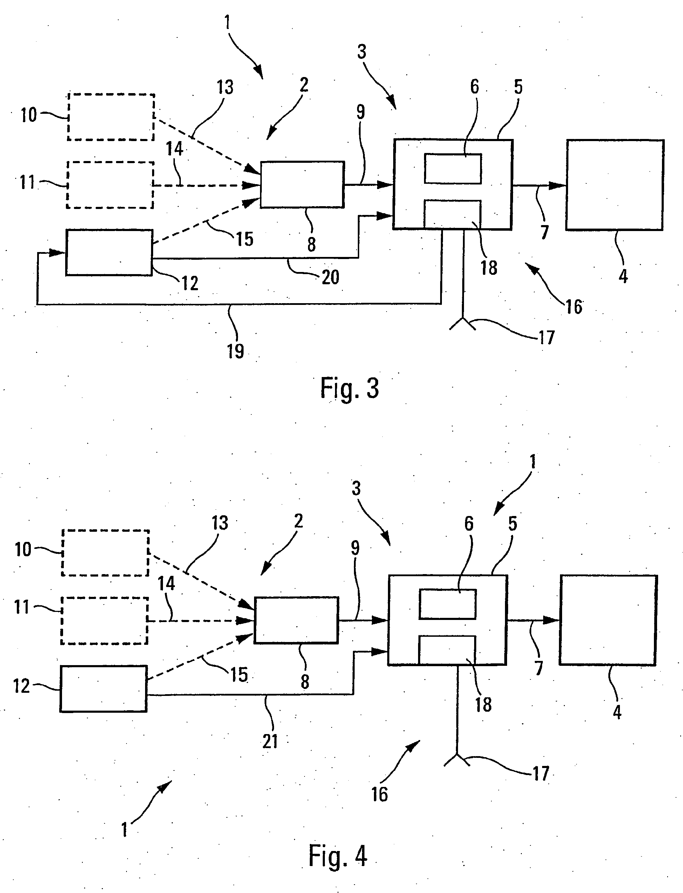

Le mode de réalisation de la figure 3 est proche de celui de la première variante de la figure 2, la seule différence étant que l'unité de référence inertielle 12 transmet l'indication de position affinée, directement, au récepteur multimode 5, à l'aide d'une liaison spécifique 20, c'est-à-dire sans passer par le calculateur 8.

Ceci permet d'améliorer le niveau d'intégrité de l'indication de position de l'aéronef. En effet, le calculateur 8 présente un niveau d'intégrité qui est plus faible que les niveaux d'intégrité de l'unité 12 et du récepteur multimode 5. Il en résulte que le niveau d'intégrité des informations est meilleur lorsque le récepteur multimode 5 les reçoit de l'unité 12 que lorsqu'il les reçoit du calculateur 8.

Un autre avantage de ce mode de réalisation réside dans le fait que le retard entre le moment où des données (signaux GPS, informations des capteurs de l'unité de référence inertielle 12) permettant de calculer lesdites indications de position, sont reçues à bord de l'aéronef, et le moment où lesdites indications de position sont reçues par le récepteur multimode 5, est moindre que dans ladite première variante du mode de réalisation de la figure 2, puisque l'on supprime l'opération de traitement desdites indications de position par le calculateur 8.

Cela permet d'améliorer les performances du guidage réalisé (par exemple par le pilote automatique) à partir des informations d'écart (entre la position de l'aéronef et l'axe d'approche virtuel) élaborées par le récepteur multimode 5. Par exemple, on peut estimer ce retard à environ 1 seconde (correspondant à une distance parcourue par l'aéronef, donc à une erreur de position, d'environ 72 mètres pour une vitesse d'approche de 140 noeuds) dans l'exemple de la première variante de la figure 2, et à seulement 150 millisecondes (soit une erreur de position d'environ 11 mètres) dans l'exemple de la figure 3. Or, les lois de guidage intégrées dans le pilote automatique sont optimisées pour le mode ILS, dans lequel un retard dû au traitement des informations est de l'ordre de 100 millisecondes (soit une erreur de position d'environ 7 mètres). Ladite erreur de position d'environ 11 mètres étant voisine de l'erreur de position d'environ 7 mètres correspondant au mode ILS, on comprend aisément que les performances du guidage seront meilleures dans l'exemple de la figure 3 que dans l'exemple de la première variante de la figure 2 (erreur de position d'environ 72 mètres). Toutefois, il convient de noter que, même dans l'exemple de la première variante de la figure 2, l'erreur de position reste bien inférieure à la précision requise lors de l'approche, laquelle est de l'ordre de 180 mètres.

Dans un autre mode de réalisation représenté sur la figure 4, l'unité de référence inertielle 12 est reliée directement au récepteur multimode 5, par l'intermédiaire d'une liaison spécifique 21 qui peut correspondre, par exemple, à la liaison 20 de la figure 3.

Dans ce dernier mode de réalisation, le récepteur multimode 5 détermine une indication de position affinée de l'aéronef, à partir :
- d'une indication de position qui est fournie par la fonction logicielle 18 (GPS) qui est intégrée dans ledit récepteur multimode 5 ; et
- d'une indication de position qui est déterminée par l'unité de référence inertielle 12 (à partir de données issues de capteurs anémométriques et/ou inertiels) et qui est transmise par la liaison 21.

Par ailleurs, on notera que :
- dans la première variante du mode de réalisation de la figure 2 et dans le mode de réalisation de la figure 3, l'indication de position que l'unité de référence inertielle 12 reçoit du dispositif GPS 16 correspond à des données brutes ("raw data"), c'est-à-dire à des données de position relative de l'aéronef par rapport à différents satellites GPS ; et
- dans la seconde variante du mode de réalisation de la figure 2 et dans le mode de réalisation de la figure 4, l'indication de position déterminée par la fonction logicielle 18 correspond, de préférence, à une position de l'aéronef dans un référentiel terrestre, caractérisée par exemple par sa latitude, sa longitude et son altitude.

## Revendications

1. Système de pilotage d'un aéronef, au moins pour piloter l'aéronef lors d'une approche de non précision en vue d'un atterrissage, ledit système de pilotage (1) étant embarqué sur l'aéronef et comportant :
- des sources d'informations (2) qui fournissent au moins une indication de position relative à la position effective de l'aéronef ;
- une unité de traitement d'informations (3), qui traite des informations issues desdites sources d'informations (2) et comprend une fonction (6) de mode d'approche assisté relative à une approche de non précision ;
- un dispositif utilisateur (4) pour une approche de non précision, qui utilise les résultats de traitements mis en oeuvre par ladite unité de traitement d'informations (3), pour permettre le guidage de l'aéronef jusqu'à son atterrissage lors d'une approche de non précision ;
- un récepteur multimode d'aide à l'atterrissage (5) destiné à mettre en oeuvre une approche de précision ; et
- un dispositif utilisateur (4) pour une approche de précision, qui comprend des fonctionnalités utilisant des paramètres issus dudit récepteur multimode d'aide à l'atterrissage (5) et qui permet le guidage de l'aéronef jusqu'à son atterrissage lors d'une approche de précision,
**caractérisé en ce que** :
- ladite fonction (6) de mode d'approche assisté est intégrée dans ledit récepteur multimode d'aide à l'atterrissage (5) ;
- ledit dispositif utilisateur (4) pour une approche de non précision correspond audit dispositif utilisateur (4) pour une approche de précision et il utilise pour l'approche de non précision lesdites fonctionnalités utilisant des paramètres issus dudit récepteur multimode d'aide à l'atterrissage (5) ;
- lesdites sources d'informations (2) comportent une base de données embarquée qui contient des informations permettant de caractériser un axe d'approche virtuel pour une approche de non précision ;
- ladite fonction (6) de mode d'approche assisté détermine des déviations latérale et verticale entre la position effective de l'aéronef et la position qu'il aurait s'il était sur ledit axe d'approche virtuel ; et
- ledit dispositif utilisateur (4) pour une approche de non précision met en oeuvre un guidage de l'aéronef de manière à annuler ces déviations.

2. Système de pilotage selon la revendication 1,
**caractérisé en ce que** ledit récepteur multimode d'aide à l'atterrissage (5) comprend une fonction (18) de positionnement par satellites, en liaison avec un système de positionnement par satellites.

3. Système de pilotage selon l'une des revendications 1 et 2,
**caractérisé en ce que** lesdites sources d'informations (2) comportent un calculateur de gestion de vol (8).

4. Système de pilotage selon la revendication 3,
**caractérisé en ce que** lesdites surces d'informations (2) comportent, de plus, une pluralité de capteurs (10, 11, 12) qui sont reliés audit calculateur de gestion de vol (8).

5. Système de pilotage selon l'une quelconque des revendications précédentes,
**caractérisé en ce que** lesdites sources d'informations (2) comportent, de plus, une unité de référence inertielle (12) qui détermine une première indication de position de l'aéronef.

6. Système de pilotage selon la revendication 5,
**caractérisé en ce que** ladite unité de référence inertielle (12) fournit ladite première indication de position à un calculateur de gestion de vol (8), qui transmet cette première indication de position audit récepteur multimode d'aide à l'atterrissage (5).

7. Système de pilotage selon la revendication 5,
**caractérisé en ce que** ladite unité de référence inertielle (12) fournit ladite première indication de position directement audit récepteur multimode d'aide à l'atterrissage (5), par l'intermédiaire d'une liaison spécifique (21).

8. Système de pilotage selon la revendication 7,
**caractérisé en ce que** ledit récepteur multimode d'aide à l'atterrissage (5) comprend une fonction (18) de positionnement par satellites en liaison avec un système de positionnement par satellites, qui détermine une seconde indication de position, et **en ce que** ledit récepteur multimode d'aide à l'atterrissage (5) détermine à partir desdites première et deuxième indications de position une première indication de position affinée.

9. Système de pilotage selon la revendication 5,
**caractérisé en ce qu'**il comporte un dispositif (16) de positionnement par satellites qui détermine une troisième indication de position qu'il fournit à ladite unité de référence inertielle (12), et **en ce que** ladite unité de référence inertielle (12) détermine une seconde indication de position affinée à partir desdites première et troisième indications de position.

10. Système de pilotage selon la revendication 9,
**caractérisé en ce que** ladite unité de référence inertielle (12) fournit ladite seconde indication de position affinée au calculateur de gestion de vol (8), qui transmet cette seconde indication de position affinée audit récepteur multimode d'aide à l'atterrissage (5).

11. Système de pilotage selon la revendication 9,
**caractérisé en ce que** ladite unité de référence inertielle (12) fournit ladite seconde indication de position affinée directement audit récepteur multimode d'aide à l'atterrissage (5), par l'intermédiaire d'une liaison spécifique (20).

12. Système de pilotage selon la revendication 5,
**caractérisé en ce qu'**il comporte un dispositif (16) de positionnement par satellites qui détermine une quatrième indication de position qu'il fournit à un calculateur de gestion de vol (8), **en ce que** ladite unité de référence inertielle (12) fournit ladite première indication de position également audit calculateur de gestion de vol (8), et **en ce que** ledit calculateur de gestion de vol (8) détermine, à partir desdites première et quatrième indications de position, une troisième indication de position affinée, qu'il transmet audit récepteur multimode d'aide à l'atterrissage (5).

13. Aéronef,
**caractérisé en ce qu'**il comporte un système de pilotage (1) tel que celui spécifié sous l'une quelconque des revendications 1 à 12.

## Claims

1. An aircraft piloting system, at least for piloting the aircraft during a non precision approach with a view to a landing, said piloting system (1) being carried on board the aircraft and comprising:
- information sources (2) which provide at least one indication of position relating to the actual position of the aircraft ;
- an information processing unit (3), which processes information emanating from said information sources (2) and which comprises an assisted approach mode function (6) relating to a non precision approach ;
- a user device (4) for a non precision approach, which uses the results of processings implemented by said information processing unit (3), for allowing the guidance of the aircraft up to its landing during a non precision approach ;
- a landing aid multimode receiver (5) intended for implementing a precision approach ; and
- a user device (4) for a precision approach, which comprises functionalities using parameters emanating from said landing aid multimode receiver (5)and which allows the guidance of the aircraft up to its landing during a precision approach,
**characterized in that** :
- said assisted approach mode function (6) is integrated into said landing aid multimode receiver (5) ;
- said user device (4) for a non precision approach corresponds to said user device (4) for a precision approach and it uses for the non precision approach said functionalities using parameters emanating from said landing aid multimode receiver (5) ;
- said information sources (2) include a database which is carried on board the aircraft and which comprises information making it possible to characterize a virtual approach axis ;
- said assisted approach mode function (6) determines lateral and vertical deviations between the actual position of the aircraft and the position that it would have if it were on said virtual approach axis ; and
- said user device (4) for a non precision approach implements a guidance of the aircraft in such a way as to cancel out these deviations.

2. The piloting system as claimed in claim 1,
**characterized in that** said landing aid multimode receiver (5) comprises a satellite-based positioning function (18), linked with a satellite-based positioning system.

3. The piloting system as claimed in one of claims 1 and 2,
**characterized in that** said information sources (2) comprise a flight management computer (8).

4. The piloting system as claimed in claim 3,
**characterized in that** said information sources (2) comprise, moreover, a plurality of sensors (10, 11, 12) which are connected to said flight management computer (8).

5. The piloting system as claimed in any one of the preceding claims,
**characterized in that** said information sources (2) comprise, moreover, an inertial reference unit (12) which determines a first position indication of the aircraft.

6. The piloting system as claimed in claim 5,
**characterized in that** said inertial reference unit (12) provides said first position indication to a flight management computer (8), which transmits this first position indication to said landing aid multimode receiver (5).

7. The piloting system as claimed in claim 5,
**characterized in that** said inertial reference unit (12) provides said first position indication directly to said landing aid multimode receiver (5), by way of a specific link (21).

8. The piloting system as claimed in claim 7,
**characterized in that** said landing aid multimode receiver (5) comprises a satellite-based positioning function (18) linked with a satellite-based positioning system, which determines a second position indication, and **in that** said landing aid multimode receiver (5) determines on the basis of said first and second position indications a first refined position indication.

9. The piloting system as claimed in claim 5,
**characterized in that** it comprises a satellite-based positioning device (16) which determines a third position indication which it provides to said inertial reference unit (12), and **in that** said inertial reference unit (12) determines a second refined position indication on the basis of said first and third position indications.

10. The piloting system as claimed in claim 9,
**characterized in that** said inertial reference unit (12) provides said second refined position indication to the flight management computer (8), which transmits this second refined position indication to said landing aid multimode receiver (5) .

11. The piloting system as claimed in claim 9,
**characterized in that** said inertial reference unit (12) provides said second refined position indication directly to said landing aid multimode receiver (5), by way of a specific link (20).

12. The piloting system as claimed in claim 5,
**characterized in that** it comprises a satellite-based positioning device (16) which determines a fourth position indication which it provides to a flight management computer (8), **in that** said inertial reference unit (12) provides said first position indication likewise to said flight management computer (8), and **in that** said flight management computer (8) determines, on the basis of said first and fourth position indications, a third refined position indication, which it transmits to said landing aid multimode receiver (5).

13. An aircraft,
**characterized in that** it comprises a piloting system (1) such as that specified under any one of the claims 1 to 12.

## Patentansprüche

1. System zur Steuerung eines Flugzeugs, zumindest zur Steuerung des Flugzeugs bei einem Nicht-Präzisionsanflug im Hinblick auf eine Landung, wobei das System (1) im Flugzeug mitgeführt wird und umfasst:
- Informationsquellen (2), die zumindest eine auf die aktuelle Position des Flugzeugs bezogene Positionsangabe bereitstellen
- eine Informationsverarbeitungseinheit (3), die Informationen aus den Informationsquellen (2) verarbeitet und eine Funktion (6) eines unterstützten Anflugmodus bezogen auf einen Nicht-Präzisionsanflug umfasst;
- eine Anwendereinrichtung (4) für einen Nicht-Präzisionsanflug welche die Ergebnisse von durch die Informationsverarbeitungseinheit (3) ausgeführten Verarbeitungsvorgängen verwendet, um bei einem Nicht-Präzisionsanflug die Führung des Flugzeugs bis zu seiner Landung zu ermöglichen;
- einen Multimode-Empfänger zur Landehilfe (5) zur Durchführung eines Präzisionsanflugs und
- eine Anwendereinrichtung (4) für einen Präzisionsanflug, die Funktionalitäten umfasst, welche Parameter aus dem Multimode-Empfänger zur Landehilfe (5) verwendet und die bei einem Präzisionsanflug die Führung des Flugzeugs bis zu seiner Landung ermöglicht,
**dadurch gekennzeichnet, dass**:
- die Funktion (6) des unterstützten Anflugmodus in den Multimode-Empfänger zur Landehilfe (5) integriert ist;
- die Anwendereinrichtung (4) für einen Nicht-Präzisionsanflug der Anwendereinrichtung (4) für einen Präzisionsanflug entspricht und für den Nicht-Präzisionsanflug die Funktionalitäten verwendet, welche Parameter aus dem Multimode-Empfänger zur Landehilfe (5) verwenden;
- die Informationsquellen (2) eine mitgeführte Datenbank umfassen, die Informationen enthält, welche es ermöglichen, eine virtuelle Anfluglinie für einen Nicht-Präzisionsanflug zu kennzeichnen;
- die Funktion (6) des unterstützten Anflugmodus laterale und vertikale Abweichungen zwischen der aktuellen Position des Flugzeugs und der Position, die es hätte, wenn es sich auf dieser virtuelle Anfluglinie befände, bestimmt und
- die Anwendereinrichtung (4) für einen Nicht-Präzisionsanflug eine Führung des Flugzeugs derart realisiert, dass diese Abweichungen aufgehoben werden.

2. Flugsteuerungssystem nach Anspruch 1,
**dadurch gekennzeichnet, dass** der Multimode-Empfänger zur Landehilfe (5) eine satellitengestützte Positionierungsfunktion (18) umfasst, die mit einem Satellitenpositionierungssystem in Verbindung steht.

3. Flugsteuerungssystem nach Anspruch 1 oder 2,
**dadurch gekennzeichnet, dass** die Informationsquellen (2) einen Flugleitrechner (8) umfassen.

4. Flugsteuerungssystem nach Anspruch 3,
**dadurch gekennzeichnet, dass** die Informationsquellen (2) außerdem eine Vielzahl von Messfühlern (10, 11, 12) umfassen, die mit dem Flugleitrechner (8) verbunden sind.

5. Flugsteuerungssystem nach einem der vorhergehenden Ansprüche,
**dadurch gekennzeichnet, dass** die Informationsquellen (2) außerdem eine Inertialreferenz-Einheit (12) umfassen, die eine erste Positionsangabe des Flugzeugs bestimmt.

6. Flugsteuerungssystem nach Anspruch 5,
**dadurch gekennzeichnet, dass** die Inertialreferenz-Einheit (12) die erste Positionsangabe an einen Flugleitrechner (8) liefert, der diese erste Positionsangabe an den Multimode-Empfänger zur Landehilfe (5) überträgt.

7. Flugsteuerungssystem nach Anspruch 5,
**dadurch gekennzeichnet, dass** die Inertialreferenz-Einheit (12) die erste Positionsangabe über eine spezielle Verbindung (21) unmittelbar an den Multimode-Empfänger zur Landehilfe (5) liefert.

8. Flugsteuerungssystem nach Anspruch 7,
**dadurch gekennzeichnet, dass** der Multimode-Empfänger zur Landehilfe (5) eine mit einem Satellitenpositionierungssystem in Verbindung stehende satellitengestützte Positionierungsfunktion (18) umfasst, die eine zweite Positionsangabe bestimmt und dadurch, dass der Multimode-Empfänger zur Landehilfe (5) aus der ersten und der zweiten Positionsangabe eine erste verfeinerte Positionsangabe bestimmt.

9. Flugsteuerungssystem nach Anspruch 5,
**dadurch gekennzeichnet, dass** es eine Satellitenpositionierungseinrichtung (16) umfasst, die eine dritte Positionsangabe bestimmt und diese an die Inertialreferenz-Einheit (12) ausgibt und dadurch, dass die Inertialreferenz-Einheit (12) aus der ersten und dritten Positionsangabe eine zweite verfeinerte Positionsangabe bestimmt.

10. Flugsteuerungssystem nach Anspruch 9,
**dadurch gekennzeichnet, dass** die Inertialreferenz-Einheit (12) die zweite verfeinerte Positionsangabe an den Flugleitrechner (8) liefert, der diese zweite verfeinerte Positionsangabe an den Multimode-Empfänger zur Landehilfe (5) überträgt.

11. Flugsteuerungssystem nach Anspruch 9,
**dadurch gekennzeichnet, dass** die Inertialreferenz-Einheit (12) die zweite verfeinerte Positionsangabe über eine spezielle Verbindung (20) unmittelbar an den Multimode-Empfänger zur Landehilfe (5) liefert.

12. Flugsteuerungssystem nach Anspruch 5,
**dadurch gekennzeichnet, dass** es eine Satellitenpositionierungseinrichtung (16) umfasst, die eine vierte Positionsangabe bestimmt und diese an einen Flugleitrechner (8) ausgibt, dadurch, dass die Inertialreferenz-Einheit (12) die erste Positionsangabe ebenfalls an den Flugleitrechner (8) ausgibt und dadurch, dass der Flugleitrechner (8) aus der ersten und der vierten Positionsangabe eine dritte verfeinerte Positionsangabe bestimmt, welche er an den Multimode-Empfänger zur Landehilfe (5) überträgt.

13. Flugzeug,
**dadurch gekennzeichnet, dass** es ein Flugsteuerungssystem (1) wie das unter einem der Ansprüche 1 bis 12 spezifizierte umfasst.
